# EUROPEAN PATENT SPECIFICATION

(11) **EP 4 524 451 B1**
(45) Date of publication and mention of the grant of the patent: **05.08.2026**
(21) Application number: 24200352.3
(22) Date of filing: 13.09.2024
(51) Int. Cl.: F16P 3/14, B23Q 11/00

(54) **PROTECTIVE DEVICE WITH TIME-OF-FLIGHT ARRAY FOR PROVIDING SAFETY MONITORING OF A MACHINE AND RELATED METHODS**
SCHUTZVORRICHTUNG MIT FLUGZEITANORDNUNG ZUR BEREITSTELLUNG VON SICHERHEITSÜBERWACHUNG EINER MASCHINE UND ZUGEHÖRIGE VERFAHREN
DISPOSITIF DE PROTECTION AVEC RÉSEAU DE TEMPS DE VOL POUR FOURNIR UNE SURVEILLANCE DE SÉCURITÉ D'UNE MACHINE ET PROCÉDÉS ASSOCIÉS

(30) Priority: 15.09.2023 US 202363583213 P
(43) Date of publication of application: 19.03.2025
(73) Proprietor: Datalogic IP Tech S.r.l., 40012 Calderara di Reno (BO) (IT)
(72) Inventor: LORENZONI, Enrico, I-40069 Zola Predosa (BO) (IT); CANI, Salvatore Valerio, I-40133 Bologna (IT)
(74) Representative: Porta & Consulenti Associati S.p.A.

(56) References cited:
- EP-A1- 2 354 624
- EP-A1- 2 628 993
- EP-B1- 2 713 093
- US-A1- 2011 298 579
- US-A1- 2021 053 225
- US-B2- 11 198 220

## Description

### TECHNICAL FIELD

The present invention relates generally to protective monitoring of a machine, and more particularly, to protective devices including a time-of-flight array employed to monitor an area around a machine having a movable portion.

### BACKGROUND

Safety laser scanners have been employed in various applications of safe monitoring areas of static areas, such as robot cells, machine perimeters, machine openings, etc., as well as dynamic applications, such as automated guided vehicles, automated guided carts, forklifts, etc. For some applications, such as wood working machinery, a certain dimension of pollution (e.g., dust, debris, etc.) may be detected as a stop condition that may result in stopping operation of the machine during normal operation when there is no actual safety hazard present. As such, there is a need for a protective device that can reduce the number of false positives when employed in an environment.

US 2011298579A1 discloses an industrial control system comprising a device according to the preamble of claim 1.

### BRIEF SUMMARY

In a first aspect thereof, the present invention relates to a protective device for a machine according to claim 1.

Preferred features of the protective device are recited in claims 2-6.

In a second aspect thereof, the invention relates to a method of operating a protective device according to claim 7.

Preferred features of the method are recited in claims 8 and 9.

In a third aspect thereof, the invention relates to a protective system according to claim 10.

Preferred features of the protective system are recited in claims 11-13.

### BRIEF DESCRIPTION OF THE DRAWINGS

Illustrative embodiments of the present invention are described in detail below with reference to the attached drawing figures, which are incorporated by reference herein and wherein:
**FIG. 1** is a simplified block diagram for a system in which a protective device according to the invention may be used in conjunction with a machine for the safety monitoring thereof;
**FIGS. 2A** and **2B** show various views of a simplified machine having the protective device installed thereon;
**FIG. 3** is a simplified block diagram of a protective device according to an embodiment of the invention;
**FIGS. 4A-4C** show the sensor array with its corresponding sensible field and defined safety area, along with corresponding control safety outputs by the controller in response to various scenarios according to embodiments of the invention;
**FIG. 5** shows an example detectable object represented by a cylinder of suitable diameter to illustrate the detection capability of the protection device of the invention; and
**FIG. 6** is a flow chart illustrating a method for operating a scan sequence of the protective device according to an embodiment of the invention.

### DETAILED DESCRIPTION

The illustrations included herewith are not meant to be actual views of any particular systems, memory device, architecture, or process, but are merely idealized representations that are employed to describe embodiments herein. Elements and features common between figures may retain the same numerical designation except that, for ease of following the description, for the most part, reference numerals begin with the number of the drawing on which the elements are introduced or most fully described. In addition, the elements illustrated in the figures are schematic in nature, and many details regarding the physical layout and construction of a memory array and/or all steps necessary to access data may not be described as they would be understood by those of ordinary skill in the art.

As used herein, the singular forms "a," "an," and "the" are intended to include the plural forms as well, unless the context clearly indicates otherwise.

As used herein, "or" includes any and all combinations of one or more of the associated listed items in both, the conjunctive and disjunctive senses. Any intended descriptions of the "exclusive-or" relationship will be specifically called out.

As used herein, the term "configured" refers to a structural arrangement such as size, shape, material composition, physical construction, logical construction (e.g., programming, operational parameter setting) or other operative arrangement of at least one structure and at least one apparatus facilitating the operation thereof in a defined way (e.g., to carry out a specific function or set of functions).

As used herein, the phrases "coupled to" or "coupled with" refer to structures operably connected with each other, such as connected through a direct connection or through an indirect connection (e.g., via another structure or component).

Embodiments of the invention relate to a protective device including a series of time-of-flight (TOF) sensors aligned with a criterion and controlled by a control unit in order to create a generally rectangular sensible detection field, the extension of which may be programmed from an appropriate user interface. The protective device may be used in a variety of applications in which particles, such as dust and/or debris, may be falsely identified as a safety threat that causes a stop condition or the machine. For example, the protective device may be disposed in the movable head of an automatic woodworking machine. In such an environment, the protective device may replace a safety laser scanner that has been typically used in monitoring of such machines, but which can exhibit poor resistance to dust and processing debris.

Embodiments of the invention may increase the immunity to particle pollution (e.g., dust, debris, etc.) by use of a plurality of TOF sensors arranged in a beam array suitable for a particular application. The TOF sensor array may be disposed on an external system of the machine, such as a movable head of a woodworking machine. According to the invention, another TOF sensor is also disposed on the machine to determine a position of the movable portion of the machine, which information may be used to adjust the safety area monitored by the TOF sensor array. By installing the protective device on a movable portion of the machine itself, fixed installation of the protective device in an area around the machine is not required which can provide flexibility in the placement of the machinery without needing to change the location or installation of the protective device.

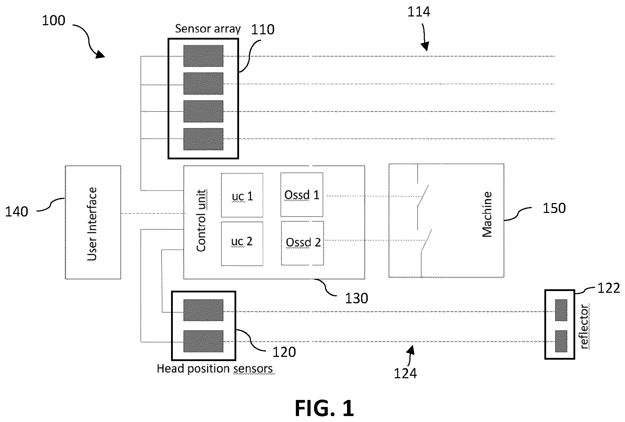

**FIG. 1** is a simplified block diagram for a system in which a protective device **100** is used in conjunction with a machine **150** for the safety monitoring thereof. The protective device **100** includes a first group of TOF sensors **110** (also referred to as a "sensor array") and a second group of TOF sensors **120** (also referred to as "head position sensor(s)" or "position sensor(s)") operably coupled with a controller **130** (also referred to as a "control unit"). The controller **130** may also be operably coupled with a user interface **140** for receiving inputs from a user, and also operably coupled with the machine **150** to send control signals thereto.

The sensor array **110** may include a first number (N) of TOF sensors arranged in a parallel sensor array to have a generally rectangular sensible field **114** (also referred to as the "safety field"). The first number N of TOF sensors may be an integer greater than one (i.e., a plurality of TOF sensors). The particular number N of TOF sensors used for a particular application may depend on the dimensions (e.g., height, width) of the desired safety area and the detection capability to achieve via the sensible field **114.**

The head position sensor **120** may include a second number (M) of TOF sensors that are used in conjunction with reflectors **122** as an accurate measuring sensor instead of an encoder on the machine **150.** In some embodiments, the second number M of TOF sensors may be one TOF sensor or a plurality of TOF sensors depending on the desired safety integrity level (SIL) and/or performance level (PL) (i.e., one or more TOF sensors). In some embodiments, the maximum number for M may be two in certain applications.

In the machine **150,** it may be desirable for the width of the safety area **115** to be variable according to the positioning of the working head. This is to avoid, for example, that near the limit of working area, there is a safety area that exceeds the shape of the machine and can be intercepted by an object in the work environment, which may cause unwanted stops. In some embodiments, an encoder may be employed by the machine **150.** However, it may be desirable for some applications for such an encoder to only be used for the machine functionality and not to be available for external units, such as the protective device **100.**

Thus, the head position sensor **120** acts as an independent measuring sensor that is fixed to the working head and with an adequate precision for the safety function. The choice falls on a long distance TOF sensor and a corresponding reflector panel. The use of this sensor may allow to have an accuracy of the order of 5/8mm up to 20m. The use of the retroreflector panel enables a much higher immunity to dust and the response times can be set high for the same purpose. The reflector may be disposed on the body of the machine **150,** which remains stationary, near the end of the shape.

The output of the head position sensor **120** may be transmitted to the control unit **130** through a bus (e.g., RS485) or analog, with the output providing an indication of the position of the movable head respect to a reference origin. Although the head position sensor **120** may include a single TOF sensor, some applications may require redundancy in order to make the function safe with an appropriate level. As a result, the head position sensor **120** may include a plurality of TOF sensors. The number of TOF sensors may vary up to a maximum of 2 in some embodiments in order to have the adequate safety level (SIL 2). In this embodiment, the second TOF sensor can be placed in the same way as the first TOF sensor, but at a different height and so that it does not interfere with the first, or in contrast to the first, so that, given a direction of movement of the head, the first TOF sensor has gradually decreasing measures, and the second TOF sensor on the contrary gradually increasing. The controller **130** may be configured to verify that the two measures are in any case consistent.

The controller **130** may be configured to control the reading process of the sensor array **110** (e.g., drive, configure settings, timing, receive data, etc.) via one or more processors (e.g., microprocessor (µp), microcontroller, FPGA, etc.). The controller **130** may also be configured to control operation of the machine **150** via output switching safety device(s) (OSSDs) that are responsive to the results of the TOF sensors array **110** according to a target safety level.

The user interface **140** may include a mechanical device (e.g., button) and/or an electronic display (e.g., touch screen) configured for interfacing with the user to receive commands, such as setting the safety zone.

In some embodiments, the sensor array **110,** head position sensor **120,** controller **130,** and/or the user interface **140** may be incorporated into a common physical device with a common housing. In some embodiments, certain elements may be physically separated from each other in separate housings, which may communicate with each other via wired or wireless connections as desired for a particular application.

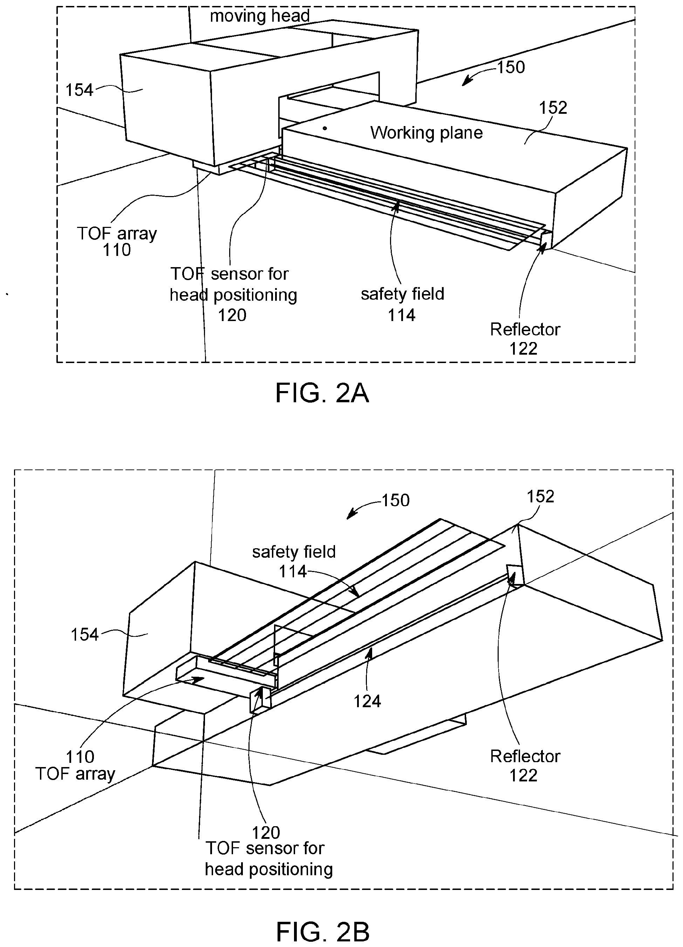

**FIGS. 2A** and **2B** show various views of a simplified machine (such as the machine **150 of** **FIG. 1****)** having the protective device **100** installed thereon. **FIG. 2A** is a top perspective view of the machine **150** and **FIG. 2B** is a bottom view of the machine **150.** The machine **150** may include a working plane **152** and a movable head **154.** As described above, the machine **150** may be a woodworking machine or other machine having a stationary working surface with a movable portion.

The sensor array **110** may be disposed on a portion of the movable head **154** with the sensible field **114** extending alongside the working plane **152** of the machine **150.** Thus, the sensor array **110** and the sensible field **114** may move along with the movable head **154** of the machine **150.** In some embodiments, the head position sensor **120** may also be disposed on a portion of the movable head **154** and its corresponding reflector **122** may be disposed on the body of the working plane **152** of the machine **150.** In this arrangement, the positioning field **124** may extend across the body of the working plane **152** substantially parallel to, and below, the sensible field **114.** Other arrangements are also contemplated. For example, the head position sensor **120** and its corresponding reflector **122** may be disposed on the other side of the movable head **154** and working plane **152** from where the sensor array **110** is disposed. In some embodiments, the position of the head position sensor **120** and the reflector **122** may be reversed such that the reflector **122** is disposed on the movable head **154** and the head position sensor **120** is disposed on the body of the working plane **152,** although the head position sensor **120** may be disposed together with the sensor array **110** in order to simplify connections to the controller **130.**

As shown in **FIGS. 2A** and **2B****,** the protective device may be disposed on one side of the machine **150** to protect one side of the working area. In some embodiments, another protective device may be disposed on another side of the machine **150** to protect another side of the working area. The second protective device (and/or any other additional protective devices) may be similarly configured and arranged in a way that protects the desired region depending on the specific configuration/operation of the machine, where the machine is installed, and the surrounding environment.

In operation, the individual sensors of the TOF sensor array **110** may be activated by the controller **130.** In some embodiments, the activation may be sequential or some other method. Time-of-flight measurements may be determined by the TOF sensors of the sensor array **110.** The controller **130** may be configured to perform activation control of the TOF sensor array **110,** such as for their reading, for their safety integrity check, and for providing control safety outputs (e.g., (OSSDs)) according to a specific safety function. The controller **130** may also manage the user interface **140,** through which the user may determine the width of the safety area by managing the switching thresholds of the measurement sensors of the TOF sensor array **110.** Through the user interface **140,** the user may be able to set switching thresholds for definition of the switching area. This switching area corresponds to the safety area for intrusion detection. In some embodiments, a single switching threshold may be defined. In other embodiments, multiple switching thresholds may be defined.

The controller **130** also receives the output of the head position sensor **120** integrated on the mobile head of the machine **150.** The head position sensor **120** establishes the relative position of the movable head **154** with respect to the working plane **152** of the machine **150.** In some embodiments, the safety zones for the TOF sensor array **110** may be adjusted responsive to the output of the head position sensor **120.**

A common setting of the switching thresholds applied to all sensors of the TOF sensor array **110** may result in the safety area being generally rectangular shaped. In some embodiments, a different management of the switching thresholds for the sensor outputs can allow greater flexibility for a customized shape of a safety zone. In other words, the user interface **140** may allow the user to manage a customized zone in the controller **130** by independently setting the switching threshold of each sensor within the TOF sensor array **110** to different values. Thus, the switching threshold for each sensor of the TOF sensor array **100** may be set according to any desired criteria, such as convenience of design, the usage for a particular application, etc.

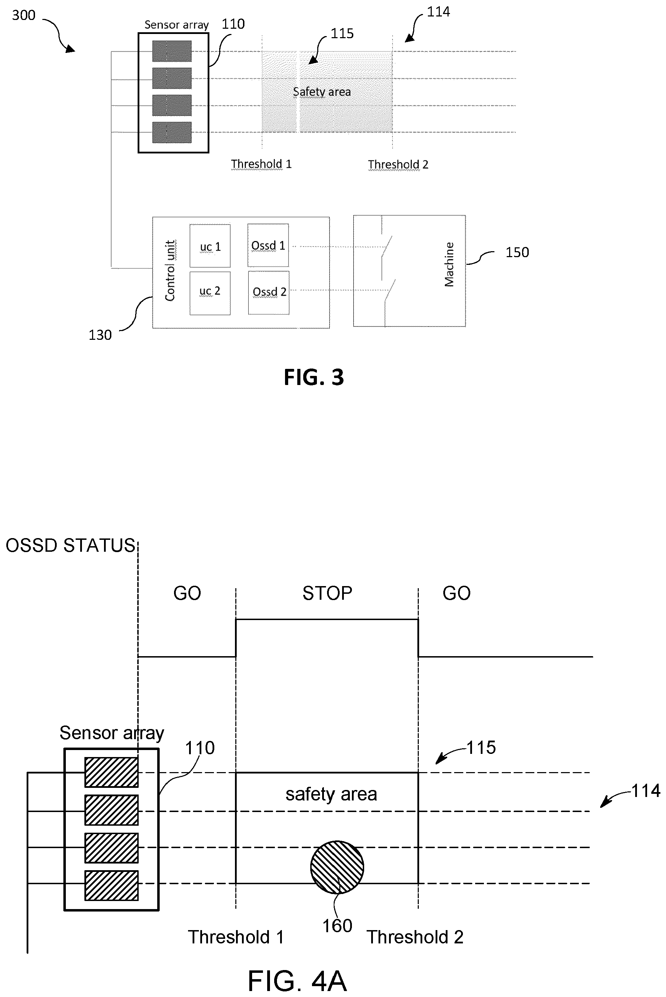

**FIG. 3** is a simplified block diagram of a protective device **300** according to an embodiment of the invention. The protective device **300** includes a sensor array **110** and controller **130** configured as described above. In this particular example shown, the sensor array **110** includes four individual TOF sensors that create the sensible field **114.** Of course, any number of individual TOF sensors are contemplated so long as there are multiple individual TOF sensors for the sensor array **110.** The TOF sensors of the sensor array **110** may be disposed to be equidistant from each other so that the distance between two consecutive TOF beams corresponds to the detection capability minus the maximum diameter of the emission beam spot. The TOF sensors may also be aligned so that they remain parallel to each other within the entire maximum detection distance for the sensible field **114.** For example, the TOF sensors of the sensor array **110** may be aligned such that their emission beams remain substantially parallel through at least the safety area **115.**

The user interface and head position sensor are not shown in **FIG. 3****,** but it should be understood that such elements may be present in some embodiments. The focus of **FIG. 3** is on the definition of the safety area **115** monitored by the sensor array **110.** The safety area **115** may be defined as region of the sensible field **114** based on one or more triggering thresholds. In the example shown in **FIG. 3****,** a first triggering threshold ("Threshold 1") and a second triggering threshold ("Threshold 2") are provided with the safety area **115** being defined as the region between the first and second thresholds. In this example, the values for the first and second thresholds are common among all TOF sensors of the sensor array **110,** thereby creating a substantially rectangular safety area **115.** In some embodiments, different TOF sensors of the sensors of the sensor array **110** may have different threshold values creating a safety area **115** having a different shape. For example, the first two TOF sensors of the sensor array **110** may have different threshold values than the third and fourth TOF sensors of the sensor array **110** (using the example of **FIG. 3** with four TOF sensors shown). In some embodiments, each TOF sensor of the sensor array **110** may have different threshold values to create a desired shape for the safety area **115.**

The implementation of the first threshold in open field applications (i.e., where the introduction of a human being is possible because there is no other protection) could be changed. In some embodiments, the zone in the sensible field **114** before the first threshold may be handled by the controller **130** similar to the safety area **115.** Because any intrusion in that zone could cause the loss of detection capability in the safety area **115,** the controller **130** may nevertheless generate a stop command. However, in specific applications, the zone before the first threshold could be physically unreachable and/or protected by a mechanical system, and in any case be defined with different filtering rules with respect to detection than those of the safety area **115.** As a result, embodiments of the invention may be more robust with respect to immunity to dust contributing to a greater overall availability of the safety device.

**FIGS. 4A-4C** show the sensor array **110** with its corresponding sensible field **114** and defined safety area **115,** along with corresponding control safety outputs (e.g., (OSSDs)) by the controller in response to various scenarios according to embodiments of the invention.

As shown in **FIG. 4A****,** an object **160** may enter the sensible field **114** within the safety area **115.** In this example, two of the TOF sensors (e.g., the bottom two sensors) of the sensor array **110** may detect the presence of the object **160** to be within the safety area **115,** causing the OSSDs status to be "STOP" causing the controller **130** to output a stop command to the machine **150.**

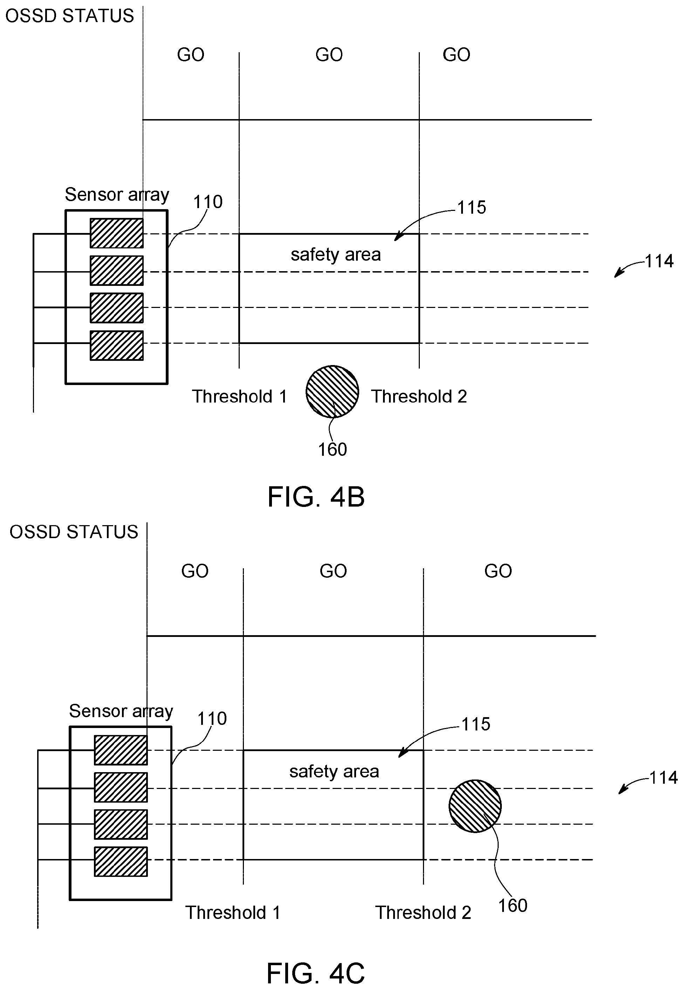

As shown in **FIG. 4B**, the object **160** may be located outside of the sensible field **114** of the sensor array **110.** As a result, no TOF sensors of the sensor array **110** detect its presence, causing the OSSDs status to be "GO." As a result, the machine may continue to operate.

As shown in **FIG. 4C****,** the object **160** may be located within the sensible field **114** of the sensor array **110,** but outside of the safety area **115.** In this example, two of the TOF sensors (e.g., the middle two sensors) of the sensor array **110** may detect the presence of the object **160** at a distance that is beyond the second threshold defining the safety area **115.** As a result, the OSSDs status to be "GO." As a result, the machine may continue to operate.

These three examples are not intended to be exhaustive of the scenarios in which objects may be detected by the sensor array **110.** For example, the object **160** may be detected by the sensor array **110** at a distance that is to the left of the first threshold as viewed in these figures. The controller may be configured to handle this scenario as a different status may also result in a STOP status because a detection of an object in this portion may obscure the contemporary detection of a different object within the safety area **115.** Such a situation may also result in an alert that informs the user about the object **160** being detected to the left of the first threshold as being the reason for the STOP status. In some embodiments, a second array may be implemented in the opposite direction which may allow the system to confirm that an object is not in the safety area **115** when the first array detects an object to the left of the first threshold. In such a situation, the GO status may be maintained if there is confidence that the safety area **115** is clear when the first array detected the first object to be blocking its monitoring of the safety area **115.**

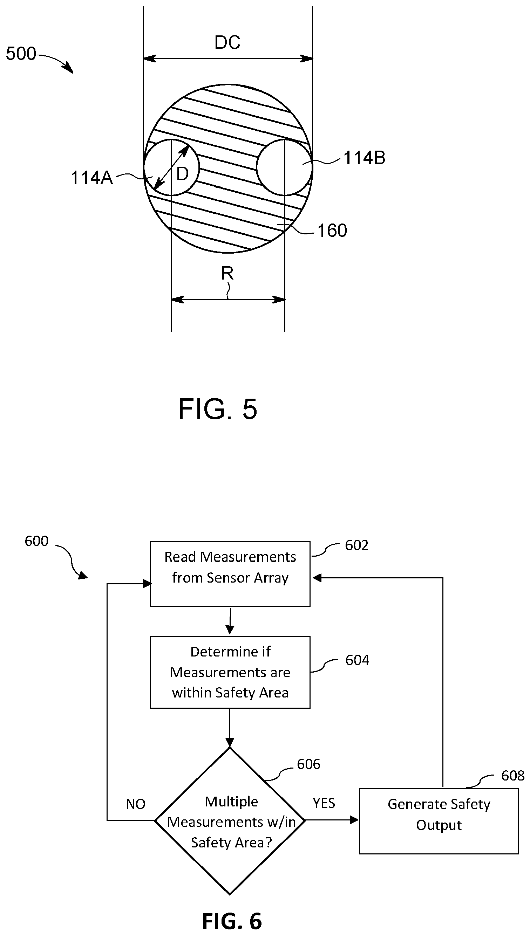

As a result, the protection device **100** enables the detection of a specific object (e.g., a person, a body part, etc.) that enters the safety area **115** and with a certain resolution. **FIG. 5** shows an example detectable object represented by a cylinder of suitable diameter to illustrate the detection capability of the protection device. The diameter of the cylinder corresponds to the detection capability (DC). The certainty that a body of an object with defined DC intrusion may occur when at least two contiguous beams of the TOF sensor array have been intercepted within the safety area. As described above, the TOF sensors of the array may be equidistant from each other so that the distance between two consecutive TOF beams corresponds to the detection capability minus the maximum diameter of the emission beam spot. The TOF sensors may also be aligned so that they remain parallel to each other within the entire maximum detection distance for the sensible field **114.**

**FIG. 6** is a flow chart **600** illustrating a method for operating a scan sequence of the protective device according to an embodiment of the invention. In some embodiments, the protective device shall respond within a pre-defined response time during which the actions herein are to be performed.

At operation **602,** the measurement for each TOF sensor of the sensor array may be read. At operation **604,** it is determined if a measurement for a detected object is within the predefined safety area. For example, the measurement may be below a predetermined safety threshold that defines a safety area within the sensible field. In some embodiments, multiple safety thresholds may define the safety area. The measurement may be at a distance that is between the safety thresholds defining the safety area. This determination may be performed for the output of each TOF sensor of the sensor array.

At operation **606,** it is determined how many consecutive sensors detected an object to be within the predetermined safety area. If that number of consecutive sensors is above a predetermined number, then the safety output is provided to the machine at operation 608. Otherwise, if the predetermined number of consecutive sensors detecting the object is less than the predetermined number, then the safety monitoring continues without providing a safety output. For example, if the predetermined number of sensors needed is set at two, then at least two consecutive (i.e., neighboring) sensors are needed to provide an output indicating that the object is at a distance from the sensors within the safety area in order to generate the safety output for the machine. If only one sensor detects the object is within the safety area, then the safety output may not be generated. As a result, smaller objects such as dust and/or debris related to operating a woodworking machine or other similar machine may not trigger the safety output. The set number of two consecutive sensors of the sensor array is provided as a nonlimiting example, and other numbers are also contemplated.

In some embodiments, other alternatives are also contemplated including monitoring a set number of even sensors (e.g., sensors 2, 4, 6, etc. of the array) and/or odd sensors (e.g., sensors 1, 3, 5, etc. of the array). As a result, if consecutive even sensors (e.g., sensor 2 and sensor 4) of the array detect an object within the safety area at the same time, the safety output may be generated.

In some embodiments, the safety output may be generated in response to consecutive sensors detecting an object being within the safety area that is detected by the sensor array in an order that indicates the object is moving toward the machine, such as sensor 1, then sensor 2, etc. which are positioned in a way for their TOF beam to be furthest from the working surface (e.g., sensor 1), to a position that is closer to the working surface (e.g., sensor 2). Because this is the typical direction of movement for the operator to approach the machine, false positives from falling debris being detected within the safety area may be ignored by the controller when the measurements of individual TOF sensors of the sensor array do not occur in the expected order or read sequence.

In some embodiments, detecting an object within the safety area for the outer beams of the sensible field may be trigger a different response than the inner beams of the sensible field. For example, in some embodiments detecting an object within the safety area by outer beams (e.g., sensor 1 and sensor 2) may generate first safety output that generates an alert (e.g., audible or visual) without shutting off the machine, whereas detecting an object within the safety area by inner beams (e.g., sensor 2 and sensor 3, sensor 3 and sensor 4, etc.) may generate a safety output that shuts off the machine. As a result, the user may be informed that a potential dangerous situation was detected at a distance that is considered safe enough for the machine to remain operational so that the user take any precautions needed.

Embodiments of the invention may improve the performance for safety protection and reducing the impact from the presence of dust and/or debris in terms of machine availability. An autonomous and flexible optic system may be installed on the machinery (e.g., woodworking machinery). In such a way the machine may be free from fixed protection typical to conventional approaches, which can also enable the machine to be moved everywhere with its safety system according customer requirement without needing to separately move and re-install the protection device in new location. With the protection device installed on the machinery itself, moving the machinery with the protection device already in place.

The foregoing method descriptions and/or any process flow diagrams are provided merely as illustrative examples and are not intended to require or imply that the steps of the various embodiments must be performed in the order presented. As will be appreciated by one of skill in the art, the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be rearranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed here may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to and/or in communication with another code segment or a hardware circuit by passing and/or receiving information, data, arguments, parameters, or memory contents. Information, arguments, parameters, data, etc. may be communicated (e.g., passed, forwarded, and/or transmitted) via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description here.

When implemented in software, the functions may be stored as one or more instructions or code on a non-transitory computer-readable or processor-readable storage medium. The steps of a method or algorithm disclosed here may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used here, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The previous description is of various preferred embodiments for implementing the invention, and the scope of the invention should not necessarily be limited by this description. The scope of the present invention is instead defined by the claims.

## Claims

1. A protective device (100; 300) for a machine (150), comprising:
a sensor array (110) disposed on the machine(150), the sensor array (110) having a plurality of time-of-flight (TOF) sensors arranged to form a sensible field (114) for TOF measurements; and
a controller (130) operably coupled to the sensor array (110), the controller (130) configured to:
define a safety area (115) within the sensible field (114);
detect an object (160) within the sensible field (114); and
generate a safety output (OSSD) that controls an operation of the machine (150) in response to the object (160) being detected within the safety area (115);
wherein the sensor array (110) is disposed on a movable head (154) of the machine (150) that is movable relative to a working plane (152) of the machine (150);
**characterised in that** the protective device (100; 300) comprises a head position TOF sensor (120) and a corresponding reflective material (122), the head position TOF sensor (120) being configured to determine a position of the movable head (154), wherein one of the head position TOF sensor (120) and the reflective material (122) is disposed on the movable head (154) and the other of the head position TOF sensor (120) and the reflective material (122) is disposed on a fixed portion of the machine (150), wherein the controller (130) is configured to adjust one or more threshold values defining the safety area (115) responsive to the position of the movable head (154) determined by the head position TOF sensor (120).

2. The protective device (100; 300) of claim 1, wherein the operation is turning off the machine (150).

3. The protective device (100; 300) of claim 1 or 2, wherein the controller (130) is configured to generate the safety output (OSSD) only responsive to consecutive TOF sensors of the sensor array (110) detecting the object (160) within the safety area (115) of the sensible field (114).

4. The protective device (100; 300) of any one of the previous claims, wherein the controller (130) is configured to define the safety area (115) as an area of the sensible field (114) less than a threshold value or between a first threshold value and a second threshold value.

5. The protective device (100; 300) of claim 4, wherein the first threshold value and the second threshold value are user configurable values set by a user through a user interface (140) operably coupled to the controller (130).

6. The protective device (100; 300) of any one of the previous claims, wherein the TOF sensors of the sensor array (110) are equidistant from each other and aligned so that emission beams remain substantially parallel through at least the safety area (115).

7. A method of operating a protective device (100; 300), the method comprising:
projecting a sensible field (114) for TOF measurements from a sensor array (110) having a plurality of time-of-flight (TOF) sensors disposed on a machine (150), the sensor array (110) being disposed on movable head (154) of the machine (150) that is movable relative to a working plane (152) of the machine (150);
defining, via a controller (130) of the protective device (100; 300), a safety area within the sensible field (114) of the sensor array (110);
detecting an object (160) within the sensible field (114) via the controller (130) coupled to the sensor array (110);
generating a safety output (OSSD) that controls an operation of the machine (150) in response to the object (160) being detected within the safety area (115);
the protective device (100; 300) comprising a head position TOF sensor (120) and a corresponding reflective material (122), the head position TOF sensor (120) being configured to determine a position of the movable head (154), wherein one of the head position TOF sensor (120) and the reflective material (122) is disposed on the movable head (154) and the other one of the head position TOF sensor (120) and the reflective material (122) is disposed on a fixed portion of the machine (150), wherein the controller (130) adjusts one or more threshold values defining the safety area (115) responsive to the position of the movable head (154) determined by the head position TOF sensor (120).

8. The method of claim 7, wherein controlling the operation of the machine (150) includes:
generating at least one of a visual or an audible alert without turning off the machine (150) responsive to one or more outer TOF sensors of the sensor array (110) detecting the object (160) being within the safety area (115); and
turning off the machine (150) responsive to one or more inner TOF sensors of the sensor array (110) detecting the object (160) being within the safety area (115).

9. The method of claim 7 or 8, further comprising detecting the object being within the safety area based on a plurality of TOF sensors of the sensor array simultaneously detecting the object being within the safety area or sequentially detecting the object being within the safety area in an expected order indicative of the object moving toward the machine.

10. A protective system, comprising:
a machine (150);
a protective device (100; 300) disposed on the machine (150) for providing safety monitoring around the machine (150), the protective device (100; 300) being according to any one of claim 1 to 6.

11. The protective system of claim 10, wherein the machine (150) is a woodworking machine.

12. The protective system of claim 10 or 11, further comprising another protective device, wherein the protective device (100; 300) is disposed on a first side of the machine (150) and the another protective device is disposed on a second side of the machine (150).

13. The protective system of claim 12, wherein the first side of the machine (150) and the second side of the machine (150) are opposing sides of the machine (150).

## Patentansprüche

1. Schutzvorrichtung (100; 300) für eine Maschine (150), umfassend:
eine an der Maschine (150) angeordnete Sensoranordnung (110), wobei die Sensoranordnung (110) eine Vielzahl von Laufzeitsensoren (TOF-Sensoren) aufweist, die so angeordnet sind, dass sie ein Erfassungsfeld (114) für TOF-Messungen bilden; und
eine Steuerung (130), die mit der Sensoranordnung (110) wirkverbunden ist, wobei die Steuerung (130) konfiguriert ist zum:
Definieren eines Sicherheitsbereichs (115) innerhalb des Erfassungsfeldes (114);
Erkennen eines Objekts (160) innerhalb des Erfassungsfeldes (114); und
Erzeugen eines Sicherheitsausgangssignals (OSSD), das einen Betriebsvorgang der Maschine (150) als Reaktion auf die Erkennung des Objekts (160) innerhalb des Sicherheitsbereichs (115) steuert;
wobei die Sensoranordnung (110) an einem beweglichen Kopf (154) der Maschine (150) angeordnet ist, der relativ zu einer Arbeitsebene (152) der Maschine (150) beweglich ist;
**dadurch gekennzeichnet, dass** die Schutzvorrichtung (100; 300) einen Kopfpositions-TOF-Sensor (120) und ein entsprechendes reflektierendes Material (122) umfasst,
wobei der Kopfpositions-TOF-Sensor (120) konfiguriert ist, um eine Position des beweglichen Kopfes (154) zu bestimmen, wobei entweder der Kopfpositions-TOF-Sensor (120) und das reflektierende Material (122) am beweglichen Kopf (154) angeordnet ist und das jeweils andere von dem Kopfpositions-TOF-Sensor (120) und dem reflektierenden Material (122) an einem feststehenden Abschnitt der Maschine (150) angeordnet ist, wobei die Steuerung (130) so konfiguriert ist, dass sie einen oder mehrere Schwellenwerte, die den Sicherheitsbereich (115) definieren, in Abhängigkeit von der durch den Kopfpositions-TOF-Sensor (120) ermittelten Position des beweglichen Kopfes (154) anpasst.

2. Schutzvorrichtung (100; 300) nach Anspruch 1, wobei der Vorgang das Ausschalten der Maschine (150) ist.

3. Schutzvorrichtung (100; 300) nach Anspruch 1 oder 2, wobei die Steuerung (130) so konfiguriert ist, dass sie den Sicherheitsausgang (OSSD) in Abhängigkeit davon erzeugt, dass aufeinanderfolgende TOF-Sensoren der Sensoranordnung (110) das Objekt (160) innerhalb des Sicherheitsbereichs (115) des Erfassungsfeldes (114) erfassen.

4. Schutzvorrichtung (100; 300) nach einem der vorstehenden Ansprüche, wobei die Steuerung (130) so konfiguriert ist, dass sie den Sicherheitsbereich (115) als einen Bereich des Erfassungsfeldes (114) definiert, der kleiner als ein Schwellenwert ist oder zwischen einem ersten Schwellenwert und einem zweiten Schwellenwert liegt.

5. Schutzvorrichtung (100; 300) nach Anspruch 4, wobei der erste Schwellenwert und der zweite Schwellenwert vom Benutzer konfigurierbare Werte sind, die von einem Benutzer über eine Benutzerschnittstelle (140) eingestellt werden, die mit der Steuerung (130) wirkverbunden ist.

6. Schutzvorrichtung (100; 300) nach einem der vorstehenden Ansprüche, wobei die TOF-Sensoren der Sensoranordnung (110) in gleichem Abstand zueinander angeordnet und so ausgerichtet sind, dass die Emissionsstrahlen mindestens durch den Sicherheitsbereich (115) hindurch im Wesentlichen parallel bleiben.

7. Verfahren zum Betreiben einer Schutzvorrichtung (100; 300), wobei das Verfahren umfasst:
Projizieren eines Erfassungsfeldes (114) für TOF-Messungen aus einer Sensoranordnung (110) mit einer Vielzahl von Laufzeitsensoren (TOF-Sensoren), die an einer Maschine (150) angeordnet sind, wobei die Sensoranordnung (110) an einem beweglichen Kopf (154) der Maschine (150) angeordnet ist, der relativ zu einer Arbeitsebene (152) der Maschine (150) beweglich ist;
Bestimmen eines Sicherheitsbereichs innerhalb des Erfassungsfeldes (114) der Sensoranordnung (110) über eine Steuerung (130) der Schutzvorrichtung (100; 300);
Erfassen eines Objekts (160) innerhalb des Erfassungsfeldes (114) über die mit der Sensoranordnung (110) gekoppelte Steuerung (130);
Erzeugen eines Sicherheitsausgangs (OSSD), der den Betrieb der Maschine (150) steuert, wenn das Objekt (160) innerhalb des Sicherheitsbereichs (115) erfasst wird;
wobei die Schutzvorrichtung (100; 300), die einen Kopfpositions-TOF-Sensor (120) und ein entsprechendes reflektierendes Material (122) umfasst, wobei der Kopfpositions-TOF-Sensor (120) konfiguriert ist, um eine Position des beweglichen Kopfes (154) zu bestimmen, wobei einer der beiden Sensoren - der Kopfpositions-TOF-Sensor (120) und das reflektierende Material (122) am beweglichen Kopf (154) angeordnet ist und das jeweils andere der beiden Elemente - der Kopfpositions-TOF-Sensor (120) und das reflektierende Material (122) - an einem feststehenden Abschnitt der Maschine (150) angeordnet ist, wobei die Steuerung (130) einen oder mehrere Schwellenwerte, die den Sicherheitsbereich (115) definieren, in Abhängigkeit von der durch den Kopfpositions-TOF-Sensor (120) bestimmten Position des beweglichen Kopfes (154) anpasst.

8. Verfahren nach Anspruch 7, wobei die Steuerung des Betriebs der Maschine (150) umfasst:
Erzeugen mindestens eines visuellen oder akustischen Warnsignals, ohne die Maschine (150) auszuschalten, in Abhängigkeit von einem oder mehreren äußeren TOF-Sensoren der Sensoranordnung (110)
Erfassen des Objekts (160), das sich innerhalb des Sicherheitsbereichs (115) befindet; und
Ausschalten der Maschine (150) in Abhängigkeit davon, dass ein oder mehrere der inneren TOF-Sensoren der Sensoranordnung (110) das Objekt (160) erfassen, das sich innerhalb des Sicherheitsbereichs (115) befindet.

9. Verfahren nach Anspruch 7 oder 8, ferner umfassend das Erfassen des Objekts, das sich innerhalb des Sicherheitsbereichs befindet, basierend auf einer Vielzahl von TOF-Sensoren der Sensoranordnung, die gleichzeitig das Objekt erfassen, das sich innerhalb des Sicherheitsbereichs befindet, oder nacheinander in einer erwarteten Reihenfolge das Objekt erfassen, das sich innerhalb des Sicherheitsbereichs befindet, was darauf hindeutet, dass sich das Objekt auf die Maschine zu bewegt.

10. Schutzsystem, umfassend:
eine Maschine (150);
eine an der Maschine (150) angeordnete Schutzvorrichtung (100; 300) zur Gewährleistung der Sicherheitsüberwachung im Umfeld der Maschine (150), wobei die Schutzvorrichtung (100; 300) nach einem der Ansprüche 1 bis 6 ausgebildet ist.

11. Schutzsystem nach Anspruch 10, wobei die Maschine (150) eine Holzbearbeitungsmaschine ist.

12. Schutzsystem nach Anspruch 10 oder 11, ferner umfassend eine weitere Schutzvorrichtung, wobei die Schutzvorrichtung (100; 300) an einer ersten Seite der Maschine (150) angeordnet ist und die weitere Schutzvorrichtung an einer zweiten Seite der Maschine (150) angeordnet ist.

13. Schutzsystem nach Anspruch 12, wobei die erste Seite der Maschine (150) und die zweite Seite der Maschine (150) einander gegenüberliegende Seiten der Maschine (150) sind.

## Revendications

1. Dispositif de protection (100 ; 300) destiné à une machine (150), comprenant :
un réseau de capteurs (110) disposé sur la machine (150), le réseau de capteurs (110) comportant une pluralité de capteurs de temps de vol (TOF) agencés de manière à former un champ de détection (114) pour des mesures TOF ; et
un contrôleur (130) couplé de manière fonctionnelle au réseau de capteurs (110), le contrôleur (130) étant configuré pour :
définir une zone de sécurité (115) à l'intérieur du champ de détection (114) ;
détecter un objet (160) situé dans le champ de détection (114) ; et
générer une sortie de sécurité (OSSD) qui commande une opération de la machine (150) en réponse à la détection de l'objet (160) dans la zone de sécurité (115) ;
dans lequel le réseau de capteurs (110) est disposé sur une tête mobile (154) de la machine (150), qui est mobile par rapport à un plan de travail (152) de la machine (150) ;
**caractérisé en ce que** le dispositif de protection (100 ; 300) comprend un capteur TOF de position de tête (120) et un matériau réfléchissant correspondant (122), le capteur TOF de position de tête (120) étant configuré pour déterminer une position de la tête mobile (154), dans lequel l'un parmi le capteur TOF de position de tête (120) et le matériau réfléchissant (122) est disposé sur la tête mobile (154) et l'autre, parmi le capteur TOF de position de tête (120) et le matériau réfléchissant (122), est disposé sur une partie fixe de la machine (150), dans lequel le contrôleur (130) est configuré pour ajuster une ou plusieurs valeurs seuils définissant la zone de sécurité (115) en fonction de la position de la tête mobile (154) déterminée par le capteur TOF de position de tête (120).

2. Dispositif de protection (100 ; 300) selon la revendication 1, dans lequel l'opération est la mise hors tension de la machine (150).

3. Dispositif de protection (100 ; 300) selon la revendication 1 ou 2, dans lequel le contrôleur (130) est configuré pour générer la sortie de sécurité (OSSD) uniquement en réponse à des capteurs TOF consécutifs du réseau de capteurs (110) détectant l'objet (160) à l'intérieur de la zone de sécurité (115) du champ de détection (114).

4. Dispositif de protection (100 ; 300) selon l'une quelconque des revendications précédentes, dans lequel le contrôleur (130) est configuré pour définir la zone de sécurité (115) comme une zone du champ de détection (114) inférieure à une valeur seuil ou comprise entre une première valeur seuil et une deuxième valeur seuil.

5. Dispositif de protection (100 ; 300) selon la revendication 4, dans lequel la première valeur seuil et la deuxième valeur seuil sont des valeurs configurables par l'utilisateur, définies par un utilisateur via une interface utilisateur (140) couplée de manière fonctionnelle au contrôleur (130).

6. Dispositif de protection (100 ; 300) selon l'une quelconque des revendications précédentes, dans lequel les capteurs TOF du réseau de capteurs (110) sont équidistants les uns des autres et alignés de telle sorte que des faisceaux d'émission restent sensiblement parallèles au moins à travers la zone de sécurité (115).

7. Procédé de fonctionnement d'un dispositif de protection (100 ; 300), le procédé comprenant :
la projection d'un champ de détection (114) pour des mesures TOF à partir d'un réseau de capteurs (110) comportant une pluralité de capteurs de temps de vol (TOF) disposés sur une machine (150), le réseau de capteurs (110) étant disposé sur une tête mobile (154) de la machine (150) qui est mobile par rapport à un plan de travail (152) de la machine (150) ;
la définition, via un contrôleur (130) du dispositif de protection (100 ; 300), d'une zone de sécurité à l'intérieur du champ de détection (114) du réseau de capteurs (110) ;
la détection d'un objet (160) situé dans le champ de détection (114) via le contrôleur (130) couplé au réseau de capteurs (110) ;
la génération d'une sortie de sécurité (OSSD) qui commande une opération de la machine (150) en réponse à la détection de l'objet (160) dans la zone de sécurité (115) ;
le dispositif de protection (100 ; 300) comprenant un capteur TOF de position de tête (120) et un matériau réfléchissant correspondant (122), le capteur TOF de position de tête (120) étant configuré pour déterminer une position de la tête mobile (154), dans lequel l'un des éléments parmi le capteur TOF de position de tête (120) et le matériau réfléchissant (122) est disposé sur la tête mobile (154) et l'autre parmi le capteur TOF de position de tête (120) et le matériau réfléchissant (122) est disposé sur une partie fixe de la machine (150), dans lequel le contrôleur (130) ajuste une ou plusieurs valeurs seuils définissant la zone de sécurité (115) en réponse à la position de la tête mobile (154) déterminée par le capteur TOF de position de tête (120).

8. Procédé selon la revendication 7, dans lequel la commande de l'opération de la machine (150) comprend :
la génération d'au moins une alerte visuelle ou sonore sans mettre la machine (150) hors tension, en réponse à un ou plusieurs capteurs TOF externes du réseau de capteurs (110)
la détection de l'objet (160) se trouvant dans la zone de sécurité (115) ; et
la mise hors tension de la machine (150) en réponse à un ou plusieurs capteurs TOF internes du réseau de capteurs (110) détectant que l'objet (160) se trouvant dans la zone de sécurité (115).

9. Procédé selon la revendication 7 ou 8, comprenant en outre la détection de l'objet se trouvant dans la zone de sécurité sur la base d'une pluralité de capteurs TOF du réseau de capteurs détectant simultanément la présence de l'objet dans la zone de sécurité ou détectant séquentiellement la présence de l'objet dans la zone de sécurité selon un ordre attendu indiquant que l'objet se déplace vers la machine.

10. Système de protection, comprenant :
une machine (150) ;
un dispositif de protection (100 ; 300) disposé sur la machine (150) afin d'assurer une surveillance de sécurité autour de la machine (150), le dispositif de protection (100 ; 300) étant selon l'une quelconque des revendications 1 à 6.

11. Système de protection selon la revendication 10, dans lequel la machine (150) est une machine de travail du bois.

12. Système de protection selon la revendication 10 ou 11, comprenant en outre un autre dispositif de protection, dans lequel le dispositif de protection (100 ; 300) est disposé sur un premier côté de la machine (150) et l'autre dispositif de protection est disposé sur un deuxième côté de la machine (150).

13. Système de protection selon la revendication 12, dans lequel le premier côté de la machine (150) et le deuxième côté de la machine (150) sont des côtés opposés de la machine (150).
